(19) Europäisches Patentamt
European Patent Office
Office européen des brevets

(11) Veröffentlichungsnummer: **0 300 303 A2**

(12) # EUROPÄISCHE PATENTANMELDUNG

(21) Anmeldenummer: **88111022.5**

(22) Anmeldetag: **11.07.88**

(51) Int. Cl.4: **C08G 69/34 , C08G 69/26 , C09J 3/16 , C09J 5/04**

Patentansprüche für folgenden Vertragsstaat: ES.

(30) Priorität: **20.07.87 DE 3723941**

(43) Veröffentlichungstag der Anmeldung: **25.01.89 Patentblatt 89/04**

(84) Benannte Vertragsstaaten: **AT BE DE ES FR GB IT NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Leoni, Roberto, Dr.**
**Via Simone Di Orsenigo 22**
**Mailand(IT)**
Erfinder: **Gruber, Werner, Dr.**
**Franz-Karl-Kremer-Strasse 7**
**D-4052 Korschenbroich 1(DE)**
Erfinder: **Rossini, Angela, Dr.**
**Viale Giovanni Sjzzani 155**
**Mailand(IT)**

(54) **Neue Polyamide aus dimerisierten Fettsäuren und Polyetherharnstoffdiaminen sowie deren Verwendung als Klebstoffe.**

(57) Thermoplastische Polyamidharze mit verbessertem Verhalten bei tiefen Temperaturen, bestehend im wesentlichen aus Polykondensationsprodukten der folgenden Komponenten

a) 10 - 50 Mol% Dimerfettsäuren

b) 5 - 45 Mol% Polyoxyalkylenharnstoffdiamin

c) 0 - 25 Mol% aliphatische Dicarbonsäuren mit 6 - 22 C-Atomen

d) 0 - 45 Mol% aliphatische, aromatische und/oder cyclische Diamine mit 2 - 40 C-Atomen aus der Klasse der diprimären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine, wobei vorzugsweise basenterminierte Harze Aminzahlen im Bereich bis 50 aufweisen, während säureterminierte Harze Säurezahlen im Bereich bis 20 besitzen und die Molekulargewichte im Bereich von 5 000 bis 20 000, vorzugsweise von 8 000 - 15 000 liegen. Die Polyamidharze können in verflüssigter Form zwischen zu verbindende Flächen gebracht werden und dann unter Fixieren einem Abbindeprozeß überlassen werden sowie allein oder mit weiteren Hilfsstoffen als Schmelzkleber verwendet werden.

EP 0 300 303 A2

## Neue Polyamide aus dimerisierten Fettsäuren und Polyetherharnstoffdiaminen sowie deren Verwendung als Klebstoffe

Die Erfindung betrifft neue Polyamide, die zur Verwendung als Klebstoffe, insbesondere von Schmelzklebstoffen, geeignet sind. Die neuen Polyamidharze enthalten neben dimerisierten Fettsäuren auf der Säureseite als charakteristischen Rohstoff zur Diamidbildung befähigte Polyoxyalkylenharnstoffdiamine.

Auf zahlreichen Gebieten der Klebetechnik gewinnen Schmelzkleber zunehmend an Bedeutung. Die Vorteile dieser Klebstoffe sind darin zu sehen, daß sie durch Abkühlen aus der Schmelze die erforderliche Bindungsfestigkeit erreichen und daher für schnell laufende Produktionsvorgänge geeignet sind. Weitere Vorteile sind darin zu sehen, daß Vorrichtungen zum Schutz gegen Lösungsmitteldämpfe entfallen und die oftmals langen Trocknungszeiten wäßriger Klebstoffe hier nicht auftreten.

Eine wichtige Klasse von Schmelzklebstoffen sind die Polyamide. Unter diesen haben Polyamide auf Basis dimerisierter Fettsäuren besondere Bedeutung gewonnen. Unter den Polyamiden auf Basis dimerisierter Fettsäuren wiederum kommt Polyamiden, die im Säureanteil dimerisierte Fettsäuren enthalten und im Aminanteil Etherdiamine, aufgrund ihrer guten Tieftemperatureigenschaften besondere Bedeutung zu.

So werden beispielsweise in der DE-A 27 54 233 Copolyamidharze beschrieben, die auf der Säureseite eine spezielle Mischung aus polymeren Fettsäuren (Dimerfettsäure) und aliphatischen Dicarbonsäuren mit 6 bis 12 C-Atomen enthalten und auf der Basenseite eine Mischung aus gesättigten aliphatischen Diaminen und Polyoxyalkylendiaminen. Die Produkte zeigen eine Sprödigkeitstemperatur von minus 25 °C.

Ähnliche Harze sind im US-Patent 4 218 351 beschrieben. Dieses betrifft Polyamide, die neben üblichen Rohstoffen 5 bis 30 Mol% Dimerfettsäure und 0,25 bis 12,5 Mol% amorphe Oligomere (Polyoxyalkylendiamine) enthalten. Dadurch kann zwar das Verhalten der Mischungen bei sehr tiefen Temperaturen noch verbessert werden, wozu allerdings ein Mischvorgang zusätzlich erforderlich ist.

Wenngleich die genannten polyetherdiaminhaltigen Polyamide für zahlreiche Anwendungen befriedigende Eigenschaften aufweisen, so bestand doch der Wunsch, das Verhalten bei tiefen Temperaturen und die Haftung auf unterschiedlichen Oberflächen zu verbessern.

Aufgabe der Erfindung ist es somit, in dieser Hinsicht verbesserte Polyamide bereitzustellen, die als Schmelzkleber eingesetzt werden können.

Gegenstand der Erfindung sind daher thermoplastische Polyamidharze mit verbessertem Verhalten bei tieferen Temperaturen und einer vorzüglichen Haftung auf verschiedensten Oberflächen.

Die neuen thermoplastischen Polyamidharze bestehen im wesentlichen aus Polykondensationsprodukten und thermoplastischen Polyamidharzen mit verbessertem Verhalten bei tiefen Temperaturen, bestehend im wesentlichen aus Polykondensationsprodukten der folgenden Komponenten

a) 10 - 50 Mol% Dimerfettsäuren

b) 5 - 45 Mol% Polyoxyalkylenharnstoffdiamin

c) 0 - 25 Mol% aliphatische Dicarbonsäuren mit 6 - 22 C-Atomen

d) 0 - 45 Mol% aliphatische, aromatische und/oder cyclische Diamine mit 2 - 40 C-Atomen aus der Klasse der diprimären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine.

Ein weiterer Gegenstand der Erfindung ist die Verwendung der neuen Polyamidharze als Klebstoffe, wobei hier wiederum ihr Einsatz als temperaturresistenter Schmelzklebstoff bevorzugt ist. Die Polyamidharze gemäß der Erfindung setzen sich daher aus einer - vorzugsweise gemischten - Säurekomponente und einer - vorzugsweise gemischten Aminkomponente zusammen.

Wichtigster Bestandteil der Säurekomponente sind Dimerfettsäuren. Unter Dimerfettsäuren werden hier Produkte verstanden, die als Hauptbestandteil das Dimerisationsprodukt einer oder mehrerer ungesättigter Fettsäuren enthalten. Dimerfettsäuren sind dem auf dem Polyamidgebiet tätigen Fachmann bekannt. Übliche Dimerfettsäuren enthalten üblicherweise wechselnde Anteile von Trimerfettsäuren und monofunktionellen Fettsäuren. Für die Zwecke der Erfindung sind solche dimerisierten Fettsäuren geeignet, deren Anteil an Trimerfettsäure unter 10 und insbesondere unter 5 Mol% liegt. Ein zu hoher Anteil an Trimerfettsäure kann nämlich zur Vergelung des Polyamids führen. Durch die Zugabe von Kettenabbrechern, das sind insbesondere monofunktionelle Fettsäuren oder monofunktionelle Amine, kann dieser unerwünschte Effekt verhindert werden.

Besonders geeignet sind Dimerfettsäuren, die durch Dimerisierung von C-18-Fettsäuren gewonnen worden sind und 36 Kohlenstoffe enthalten. Darüber hinaus können auch kürzerkettige oder längerkettige Dimerfettsäuren eingesetzt werden, soweit verfügbar.

Als weitere Säurekomponente können die erfindungsgemäßen Polyamidharze aliphatische Dicarbonsäuren mit 6 bis 22 C-Atomen enthalten. Bevorzugt sind hier gesättigte Dicarbonsäuren mit 6 bis 12 C-Atomen, insbesondere lineare Dicarbonsäuren mit endständigen Carboxylgruppen. So sind insbesondere Adipinsäure, Heptandicarbonsäure, Octandicarbonsäure, Azelainsäure, Nonandicarbonsäure und/oder Brassylsäure sowie deren höhere Homologen geeignet. Zur Auswahl der Art und Menge der Dicarbonsäuren gilt das Folgende:

Werden Polyamidharze mit niederem Schmelzpunkt gewünscht, so wird der Fachmann keine aliphatischen Dicarbonsäuren mit 6 bis 22 C-Atomen oder nur geringe Mengen derartiger Säuren einsetzen. Werden hohe Schmelzpunkte gefordert, so werden im Rahmen der vorgegebenen Molmenge größere Anteile an derartigen Dicarbonsäuren eingesetzt, und zwar insbesondere die kürzerkettigen, etwa Adipinsäure.

Als wichtigsten Bestandteil erhalten die erfindungsgemäßen Polyamidharze 5 bis 45 Mol% eines Diamins der allgemeinen Formel:

$$H_2N-\underset{R}{\underset{|}{CH}}-CH_2-\left[O-CH_2-\underset{R}{\underset{|}{CH}}\right]_n-\overset{H}{\overset{|}{N}}-\underset{O}{\underset{\|}{C}}-\overset{H}{\overset{|}{N}}-\left[-\underset{R}{\underset{|}{CH}}-CH_2O\right]_m CH_2-\overset{R}{\overset{|}{CH}}-NH_2 \quad I$$

in der R = H, $CH_3$, $C_2H_5$ und n = 1 - 50 bedeuten, vorzugsweise R = $CH_3$ und n = 5 - 30. Derartige Diamine werden hergestellt durch Reaktion der entsprechenden Diamine, z.B. einem Polyoxyethylendiamin mit Harnstoff im Verhältnis 2 : 1. Als Diamine können auch Bis(-3-aminopropyl)polytetrahydrofurane zur Reaktion gebracht werden. Die resultierenden Diamine haben dann folgende Struktur

$$H_2N-(CH_2)_3-O\left[-(CH_2-CH_2)_2-O\right]_n-(CH_2)_3-\overset{H}{\overset{|}{N}}-\overset{O}{\overset{\|}{C}}-NH-(CH_2)_3-$$
$$\left[-O-(CH_2-CH_2)_2\right]_m-O-(CH_2)_3-NH_2$$

n = 6 - 20

Als weitere Aminkomponente können die erfindungsgemäßen Polyamidharze bis zu 45 Mol% aliphatische, aromatische und/oder cyclische Diamine mit 2 bis 40 C-Atomen aus der Klasse der diprimären Diamine, der sekundären Aminogruppen enthaltenden Diamine mit Alkylsubstituenten mit nicht mehr als 8 C-Atomen am N-Atom und/oder der zu zweifachen Amidbildung befähigten heterocyclischen Diamine. Bevorzugt sind Diamine mit 2 bis 20 C-Atomen, insbesondere deren niedere gerad- oder verzweigtkettige aliphatische oder monocyclische diprimäre Diamine bzw. monocyclische, heterocyclische Diamine. Die hier in Frage kommenden Diamine lassen sich in verschiedene Gruppen aufteilen. Von Bedeutung sind beispielsweise die diprimären aliphatischen Diamine mit endständigen Aminogruppen. Unter diesen sind Amine bevorzugt, die in ihrem Kohlenstoffgerüst den vorgenannten Dicarbonsäuren einschließlich Dimerfettsäuren entsprechen. Typische Vertreter im einzelnen sind daher Ethylendiamin, Propylendiamin, Hexamethylendiamin und deren Homologe sowie Dimerfettdiamin (herstellbar durch Umwandlung von Dimerfettsäuren in die Dinitrile und anschließende Hydrierung der beiden Nitrilgruppen). Eine weitere Gruppe von Diaminen sind aromatische Diamine. Eingesetzt werden können solche Diamine, die sich von Benzol-, Toluol- oder anderen substituierten Aromaten ableiten, zum Beispiel 2,6-Toluylendiamin, Xylylendiamin und 4,4′-Diphenylmethandiamin. Weiter können die analogen Cyclohexanderivate eingesetzt werden.

Eine weitere Klasse von Diaminen, die in den erfindungsgemäßen Polyamidharzen eingesetzt werden können, enthalten eine oder zwei sekundäre Aminogruppen, die einen Alkylsubstituenten mit nicht mehr als 8 C-Atomen am N-Atom aufweisen. Derartige Diamine leiten sich von den zuvor benannten diprimären aliphatischen Diaminen ab und weisen am N-Atom einen kurzkettigen Alkylsubstituenten auf, inbesondere Methyl, Ethyl oder Propyl.

Zur Herstellung der erfindungsgemäßen Polyamidharze können schließlich solche heterocyclischen Diamine mitverwendet werden, die zur zweifachen Amidbildung befähigt sind. Dabei handelt es sich vorzugsweise um aliphatische Heterocyclen. Wichtigster Vertreter dieser Gruppe ist das Piperazin.

Die erfindungsgemäßen Polyamidharze können Säurekomponenten und Aminkomponenten in stöchiometrischen Mengen enthalten. Für den Einsatz als Schmelzkleber wird es jedoch in der überwiegenden Anzahl der Fälle gewünscht, daß restliche Aminogruppen oder restliche Säuregruppen vorhanden sind.

Um dies zu erreichen, wird man einen Säure- oder Basenüberschuß einsetzen, der jedoch nicht mehr als 10 Äquivalentprozent aller funktionellen Gruppen ausmacht. Basenterminierte Harze weisen Aminzahlen bis etwa 50, vorzugsweise von 2 bis 20 und insbesondere von 2 bis 15 auf. Säureterminierte Harze sollten eine Säurezahl im Bereich bis etwa 20, vorzugsweise von 2 bis 10 besitzen.

Die erfindungsgemäßen Polyamidharze weisen ein Molekulargewicht (Zahlenmittel) im Bereich von 5 000 bis 20 000, vorzugsweise von 8 000 bis 15 000 auf. Zur Erzielung hoher Molekulargewichte wird man Säure- und Basenkomponente in möglichst äquivalenten Mengen einsetzen, wohingegen zur Erreichung niederer Molekulargewichte mit Überschüssen einer Komponente gearbeitet werden kann. Eine weitere Möglichkeit zur Erniedrigung des Molekulargewichts ist die Zugabe von Kettenabbrechern wie monofunktionellen Fettsäuren oder monofunktionellen Aminen. Andererseits kann das Molekulargewicht durch einen gewissen Anteil an trifunktionellen Komponenten, etwa Trimerfettsäure, gesteigert werden.

Die erfindungsgemäßen Polyamide besitzen einen Erweichungspunkt (bestimmt nach ASTM-E 28) im Bereich von 60 - 200 °C, vorzugsweise 80 - 150 °C.

Die Tieftemperatureigenschaften derartiger Polyamide scheinen bisher unübertroffen. Die Bedingungen des Mandreltests (Wicklung eines Prüfkörpers der Dimension 20 mm x 170 mm und einer Dicke von 1 mm um einen Messingzylinder mit einem Durchmesser von 25.6 mm µm 360 °) werden meist bei -65 °C noch erfüllt. Diese Eigenschaft ist für spezielle Anwendungen, z.B. Verguß von Steckverbindungen in der Kühltechnik von erheblicher Bedeutung. Ein weiterer Vorteil derartiger Polyamide sind die Haftungseigenschaften. Es könnte erwogen werden, daß durch den Einbau der polaren Harnstoffgruppe in das Makromolekul sich günstigere Substrathaftungen bei schwer zu verklebenden Materialien wie PVC, Polyester, Polyethylen und auch Metallen wie Al, Cu, Fe einstellen.

## Beispiele

Zur Herstellung der neuen Polyamide wurde von folgenden Komponenten ausgegangen.

Säurekomponenten:

Techn. reine Stearinsäure, Sebazinsäure, Azelainsäure.
Dimerfettsäure war techn. dimerisierte Fettsäure (natürliches Gemisch aus $C_{16}$ $C_{18}$ FS) mit einem Anteil an 1 Gew.-% monomeren, 95 Gew.-% dimeren und 4 % trimeren FS.

Aminkomponenten:

Technisch reines Ethylendiamin; Dimerfettsäurediamin erhalten aus vorstehend beschriebener Dimerfettsäure durch Überführung in das Nitril und anschließende Hydrierung;
Polyoxyalkylendiamin war Bis-(2-aminopropyl)-polyoxypropylenoxid (Mol-Gewicht 2000).
Umsetzungsprodukt aus 1 Mol Harnstoff mit 2 Mol eines Bis-(2-aminopropyl)-polyoxypropylenoxids mit durchschnittlichem Mol-Gewicht 3000.

Die Kondensation wurde in einem Glaskolben unter Stickstoffatomosphäre und Rühren vorgenommen. Die vorgelegten Carbonsäuren wurden zunächst auf etwa 60 °C erhitzt und dann die weiteren Reaktionskomponenten zugegeben. Innerhalb einer Stunde wurde dann auf 230 °C aufgeheizt und eine Stunde bei dieser Temperatur gehalten. Dann wurde während der nächsten Stunde bei konstanter Temperatur auf 15 mbar evakuiert. Nach Abkühlen auf 120 °C wurde das Reaktionsprodukt abgelassen und zur Bestimmung der Eigenschaften isoliert.

In der folgenden Tabelle 1 sind in Abhängigkeit von der laufenden Nummer des Beispiels die eingesetzten Mengen in g angegeben sowie Amin- und Säurezahl des Reaktionsprodukts. Auch sind der Erweichungspunkt (R + B, ASTM E -28) sowie die für die bei tiefen Temperaturen gefundenen Werte für die Flexibilität in °C aufgeführt. Diese wurde durch den Mandrel-Test bestimmt. Dazu wurde ein Prüfkörper der Dimension 20 mm x 170 mm und einer Dicke von 1 mm um einen Messingzylinder eines Durchmessers von 25,6 mm µm 360 ° gewickelt. Die Prüfungen erfolgten bei abnehmenden Temperaturen (Prüfkörper und Zylinder im Temperaturgleichgewicht). Die Mandrel-Temperatur war die niedrigste Temperatur, bei der drei von fünf Prüfkörpern den Wickeltest ohne Bruch überstanden.

In nachstehender Tabelle 1 sind die in Abhängigkeit von der laufenden Nummer des Beispiels 1 bis 3 die Mengen der eingesetzten Komponenten wiedergegeben sowie die chemischen bzw. physikalischen Kennwerte.

Tabelle 1

| Komponenten/Kennwerte | Beispiel 1 | Beispiel 2 | Beispiel 3 | |
|---|---|---|---|---|
| Dimerfettsäure | 468,4 g | 604,4 g | 638,6 g | |
| Stearinsäure | - | 3,6 g | 3,4 g | |
| Sebazinsäure | - | 35,4 g | - | |
| Azelainsäure | - | - | 15,8 g | |
| Polyoxyalkylenharnstoffdiamin | 468,4 g | 282,4 g | 271,0 g | |
| Ethylendiamin | 39,4 g | 74,2 g | 71,2 g | |
| Dimerfettsäurediamin | 23,8 g | - | - | |
| Erweichungspunkt | 100 °C | 150 °C | 130 °C | |
| Viskosität bei 210 °C (mPa•s) | 1 500 | | 2 500 | 2 900 |
| Aminzahl | 4 | 5,5 | 5 | |
| Säurezahl | 1 | 1 | 1,3 | |
| Mandrel-Test | - 65 °C | - 65 °C | - 60 °C | |

Zum Vergleich gegenüber dem Stand der Technik (Mitverwendung von Polyoxyalkylendiamin (siehe eingangs der Beispiele bei "Aminkomponente" wurden mit diesem Rohstoff Vergleichsversuche in ganz analoger Weise durchgeführt und die Werte der Produkte in gleicher Weise ermittelt. In der nachstehenden Tabelle 2 sind die entsprechenden Daten für die Vergleichsversuche aufgelistet.

Tabelle 2

| Vergleichsversuche A, B und C | | | |
|---|---|---|---|
| Komponenten/Kennwerte | Vergleich A | Vergleich B | Vergleich C |
| Dimerfettsäure | 554,7 g | 667,3 g | 702,0 g |
| Stearinsäure | - | 3,9 g | 3,8 g |
| Sebazinsäure | - | 39,1 g | - |
| Azelainsäure | - | - | 17,4 g |
| Ethylendiamin | 40,9 g | 81,9 g | 78,2 g |
| Dimerfettsäurediamin | 122,9 g | - | - |
| Polyoxyalkylendiamin | 291,9 g | 207,8 g | 198,6 g |
| Erweichungspunkt | 95 °C | 160 °C | 135 °C |
| Viskosität bei 210 °C (mPa•s) | 4 000 | 4 000 | 2 750 |
| Aminzahl | 3 | 5,5 | 5 |
| Säurezahl | 1 | 1 | 1 |
| Mandrel Test (100 % pass) | - 45 °C | | - 45 °C |

Zur Bestimmung der Klebeeigenschaften wurden Zugscherfestigkeiten nach DIN 52283 bestimmt.
Verklebt wurden: Aluminium gegen Aluminium (Al/Al)
PVC gegen PVC (Hart-PVC) sowie Polyesterfolie
(Polyethylenterephthalat = PE)

Die ermittelten Werte in N pro $mm^2$ sind in der nachfolgenden Tabelle 3 aufgelistet.

Tabelle 3

| Substrate | Beispiel 1 | Beispiel 2 | Beispiel 3 |
|---|---|---|---|
| Al/Al | 10,6 | 10,8 | 11,8 |
| PVC/PVC | 9,5 | 7,0 | 9,1 |
| PE/PE | 4,5 | 3,0 | 4,7 |

Die mit den Vergleichsverbindungen hergestellten Verklebungen zeigten folgende Scherfestigkeiten, die in der nachstehenden Tabelle 4 aufgeführt sind.

Tabelle 4

| Substrate | Vergleichsversuch 2 | Vergleichsversuch 4 | Vergleichsversuch 6 |
|---|---|---|---|
| Al/Al | 4,5 | 5,4 | 3,5 |
| PVC/PVC | 1,9 | 2,3 | 2,0 |
| PE/PE | 0,4 | 0,8 | 0,5 |

**Ansprüche**

1. Thermoplastische Polyamidharze mit verbessertem Verhalten bei tiefen Temperaturen, bestehend im wesentlichen aus Polykondensationsprodukten der folgenden Komponenten

a) 10 - 50 Mol% Dimerfettsäuren

b) 5 - 45 Mol% Polyoxyalkylenharnstoffdiamin

c) 0 - 25 Mol% aliphatische Dicarbonsäuren mit 6 - 22 C-Atomen

d) 0 - 45 Mol% aliphatische, aromatische und/oder cyclische Diamine mit 2 - 40 C-Atomen aus der Klasse der diprimären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine.

2. Polyamidharze nach Anspruch 1, dadurch gekennzeichnet, daß ihr Säure- bzw. Basenüberschuß nicht mehr als 10 Äquivalent-% aller funktionellen Gruppen ausmacht, wobei vorzugsweise basenterminierte Harze Aminzahlen im Bereich bis 50, vorzugsweise von 2 - 20 und insbesondere von 2 - 15 aufweisen, während säureterminierte Harze Säurezahlen im Bereich bis 50, vorzugsweise von 2 - 20 besitzen.

3. Polyamidharze nach Ansprüchen 1 und 2, dadurch gekennzeichnet, daß sie ein Molekulargewicht im Bereich von 3 000 - 20 000, vorzugsweise von 8 000 - 15 000 besitzen.

4. Polyamidharze nach Ansprüchen 1 bis 3, dadurch gekennzeichnet, daß man zu ihrer Herstellung technische Dimerfettsäuren mit einem Gehalt an Trimerfettsäuren nicht über 20 Mol%, vorzugsweise nicht über 10 Mol% einsetzt.

5) Polyamidharze nach Ansprüchen 1 bis 4, dadurch gekennzeichnet, daß man zu ihrer Herstellung zusätzlich gesättigte aliphatische Dicarbonsäuren mit vorzugsweise 6 - 18 C-Atomen einsetzt.

6) Polyamidharze nach Ansprüchen 1 bis 5, dadurch gekennzeichnet, daß man zu ihrer Herstellung zusätzlich Diamine mit 2 - 20 C-Atomen, insbesondere niedere gerad- oder verzweigtkettige aliphatische oder monocyclische diprimäre Diamine und/oder monocyclische heterocyclische Diamine einsetzt.

7) Verfahren zum Verbinden bzw. Verkleben von Kunststoff- und/oder Metallflächen, wobei Polyamidharze in verflüssigter Form zwischen die zu verbindenden Flächen gebracht werden und dann unter Fixieren einem Abbindeprozeß überlassen werden.

8) Verwendung von Polyamidharzen nach Ansprüchen 1 bis 6 allein oder mit weiteren Hilfsstoffen als Schmelzkleber.

Patentansprüche für folgende Vertragsstaat : ES

1. Verfahren zur Herstellung von thermoplastische Polyamidharzen mit verbessertem Verhalten bei tiefer Temperaturen, dadurch gekennzeichnet, daß man die folgenden Komponenten

a) 10 - 50 Mol% Dimerfettsäuren,

b) 5 - 45 Mol% Polyoxyalkylenharnstoffdiamin,

c) 0 - 25 Mol% aliphatische Dicarbonsäuren mit 6 - 22 C-Atomen

d) 0 - 45 Mol% aliphatische, aromatische und/oder cyclische Diamine mit 2 - 40 C-Atomen aus der Klasse der diprimären Diamine, der sekundäre Aminogruppen enthaltenden Diamine mit Alkylsubstituenten mit nicht mehr als 8 C-Atomen am N-Atom und/oder der zur zweifachen

Amidbildung befähigten heterocyclischen Diamine. solange unter Erhitzen auf Temperaturen von 60 bis 245 °C kondensiert, daß ihr Säure- bzw. Basenüberschuß nicht mehr als 10 Äquivalent-% aller funktionellen Gruppen ausmacht, wobei verzugsweise basenterminierte Harze Aminzahlen im Bereich bis 50, vorzugsweise von 2 - 20 und insbesonderd von 2 - 15 aufweisen, während säuerterminierte Harze Säurezahlen im Bereich bis 50, vorzugsweise von 2 - 20 besitzen./

2. Verfahren zur Herstellung von Polyamidharzen nach Anspruch 1, dadurch gekennzeichnet, daß die Kondensation so geführt wird, daß sie ein Molekulargewicht im Bereich von 3 000 - 20 000, vorzugsweise von 5 - 15 000 besitzt.

3. Verfahren zur Herstellung von Polyamidharzen nach Ansprüchen 1 und 2, dadurch gekennzeichnet, daß man zu ihrer Herstellung technische Dimerfettsäuren mit einem Gehalt an Trimerfettsäuren nicht über 20 Mol%, vorzugsweise nicht über 10% einsetzt.

4) Verfahen zur Herstellung von Polyamidharzen anach Ansprüchen 1 bis 3, dadurch gekennzeichnet, daß man zu ihrer Herstellung zusätzlich gesättigte aliphatische Dicarbonsäuren mit vorzugsweise 6 - 18 C-Atomen einsetzt.

5) Verfahren zur Herstellung von Polyamidharzen nach Anspru chen 1 bis 4, dadurch gekennzeichnet, Daß man zu ihrer Herstellung zusützlich Diamine mit 2 -20 C-Atomen, insbesondere niedere gerad- oder verzweigtkettige aliphatische oder monocyclische diprimäre Diamine und.oder monocyclische heterocyclische Diamine einsetzt.

6) Verfahren zum Verbinden bzw. Verkleben von Kunststoff-und.oder Metallflächen, wobei Polyamidharze in verflüssigter Form zwischen die zu verbindenden Flächen gebracht werden und dann unter Fixieren einem Abbindeprozeß überlassen werden.

7) Verfahren nach Anspruch 6 zum Verbinden von Werkstoffen, wobei die Verfahrensprodukte allein oder mit weiteren Hilfsstoffen als Schmelzkleber aufgetragen werden.